# EUROPÄISCHE PATENTSCHRIFT

(11) **EP 1 419 638 B1**
(45) Veröffentlichungstag und Bekanntmachung des Hinweises auf die Patenterteilung: **26.10.2005**
(21) Anmeldenummer: 02776656.7
(22) Anmeldetag: 12.08.2002
(51) Int. Cl.: H04L 29/06, G06F 1/00

(54) **Verfahren, Servercomputer und System zur Datenzugriffskontrolle**
Method, server and system for data access control
Procédé, serveur informatique et système de contrôle d'accès aux données

(30) Priorität: 13.08.2001 DE 10138381
(43) Veröffentlichungstag der Anmeldung: 19.05.2004
(73) Patentinhaber: ORGA Systems enabling services GmbH, 33104 Paderborn (DE)
(72) Erfinder: STURM, Oliver, 33098 Paderborn (DE)
(74) Vertreter: Richardt, Markus Albert
(86) Internationale Anmeldenummer: PCT/DE2002/002971
(87) Internationale Veröffentlichungsnummer: WO 2003/017612

(56) Entgegenhaltungen:
- EP-A- 1 102 157
- WO-A-00/44130
- WO-A-01/17310
- WO-A-01/99378

## Beschreibung

Die Erfindung betrifft ein Computersystem und Verfahren zur Datenzugriffskontrolle.

Aus dem Stand der Technik sind verschiedene Verfahren zur Datenzugriffskontrolle bekannt, insbesondere auch hinsichtlich des Zugriffs auf Daten über Computemetzwerke, insbesondere das Internet.

Die gebräuchlichste Methode ist, dass ein Benutzer zur Eingabe seiner Benutzerkennung, seiner sogenannten User ID, und eines Passworts zur Überprüfung seiner Zugangsberechtigung zu einer Web-Seite aufgefordert wird. Wenn die User ID und das Passwort von dem Server als gültig erkannt werden, erhält der Benutzer Zugriff auf die gewünschte Web-Seite bzw. die entsprechenden Daten.

Ein wesentlich sichereres Verfahren ist die Benutzung einer sogenannten Public Key Infrastructure (PKI) mit asymmetrischen Schlüsseln, das heißt, einem öffentlichen und einem privaten Schlüssel für jeden Benutzer. Typischerweise ist der private Schlüssel des Benutzers auf einer sogenannten Smart Card gespeichert. Der private Schlüssel wird von der Smart Card mittels eines Kartenlesegeräts gelesen und zu dem Client des Benutzers übertragen.

Die aus dem Stand der Technik bekannten Verfahren zur Datenzugriffskontrolle sind entweder nachteilig, insofern die Sicherheit der Datenzugriffskontrolle keinen hohen Anforderungen genügt oder insofern, als dass zusätzliche Einrichtungen wie z. B. zusätzliche Chipkarten und /oder Kartenlesegeräte erforderlich sind.

Aus dem Stand der Technik ist es ferner bekannt, ein Mobiltelefon, insbesondere ein Mobiltelefon, welches nach dem GSM Standard arbeitet, mittels dessen Telefonnummer, der sogenannten Mobile Station International Integrated Services Digital Network (MSISDN) Nummer zu authentifizieren. Die MSISDN ist auf einer Chipkarte, dem sogenannten Subscriber Identification Module (SIM), gespeichert und wird von einem in dem Mobiltelefon integrierten Chipkartenlesegerät gelesen. Auf der SIM können auch noch weitere benutzerspezifische Daten gespeichert sein.

Die MSISDN wird bei jedem Anruf von dem Mobiltelefon beim Aufbau der Verbindung mit übertragen. Ebenso wird die MSISDN auch beim Absenden von elektronischen Nachrichten, so genannten Short Message Service (SMS) Nachrichten, von dem Mobiltelefon mit übertragen. Das Gleiche trifft auch für Unstructured Sublementary Service Data (USSD) Nachrichten zu.

Entsprechende hierauf beruhende Verfahren und Vorrichtungen sind beispielsweise aus US-A- 5, 915, 225; US-A- 6, 014, 561 und US-A- 6, 070 , 076 bekannt.

Patentanmeldung EP-A-1 102 157 beschreibt ein Verfahren zur Datenzugriffskontrolle, in dem ein Benutzer eine Verbindung mit einem Server aufbaut und seine Benutzerkennung eingibt. Dann versendet der Benutzer eine SMS-Nachricht von seinem Mobiltelefon, so dass die MSISDN des Mobiltelefons zu einem authentifizierungsserver übertragen wird. Der Benutzer erhält Zugriff auf den Server, wenn die SMS-Nachricht innerhalb eines vorgegebenen Zeitfensters empfangen wird und die empfangene MSISDN der Benutzerkennung entspricht.

Der Erfindung liegt die Aufgabe zu Grunde ein verbessertes Verfahren und ein verbessertes System zur Datenzugriffskontrolle zu schaffen.

Die der Erfindung zu Grunde liegende Aufgabe wird jeweils mit den Merkmalen der unabhängigen Patentansprüche gelöst.

Bevorzugte Ausführungsformen der Erfindung sind in den abhängigen Ansprüche angegeben.

Die Erfindung erlaubt es eine Datenzugriffskontrolle mittels eines Mobiltelefons durchzuführen. Für die Überprüfung der Zugriffsberechtigung auf bestimmte Daten wird dabei eine Mobiltelefon-Kennung verwendet, vorzugsweise die MSISDN des Mobiltelefons.

Nach einer bevorzugten Ausführungsform der Erfindung wird die MSISDN des Mobiltelefons des Benutzers nach einer entsprechenden Aufforderung zu einem Servercomputer übertragen, indem der Benutzer eine Telefonnummer des Servercomputers mit seinem Mobiltelefon anruft. Bei diesem Anruf wird die MSISDN mit zu dem Servercomputer übertragen und dort geprüft.

Alternativ kann der Benutzer auch eine elektronische Nachricht, vorzugsweise eine SMS, von seinem Mobiltelefon an den Servercomputer senden, wobei auch mit dieser elektronischen Nachricht zusammen die MSISDN übertragen wird. Die elektronische Nachricht kann weitere Daten zur Authentifizierung des Benutzers beinhalten, so z. B. eine Benutzerkennung oder eine sogenannte Personal Identification Number (PIN).

Ferner kann der Benutzer auch eine USSD Nummer wählen. Beim Aufbau der entsprechenden Telefonverbindung wird ebenfalls die MSISDN automatisch mit übertragen. Die USSD Nummer kann als zusätzlichen Parameter weitere Daten zur Authentifizierung des Benutzers z. B. die PIN beinhalten.

Neben der MSISDN kann auch eine andere Kennung des Mobiltelefons verwendet werden. Eine solche alternative Kennung kann beispielsweise auf der SIM Karte gespeichert sein und wird von dort für die Übertragung zu dem Server abgerufen.

Nach einer weiteren bevorzugten Ausführungsform der Erfindung ist serverseitig ein Datenbanksystem vorhanden, in dem gültige MSISDN Nummern für den Zugriff auf bestimmte Daten gespeichert sind. Dabei ist einem bestimmten Bedienelement auf der Web-Seite für den Zugriff auf bestimmte Daten eine Liste von gültigen MSISDNs zugeordnet, welche für den Zugriff auf die entsprechenden Daten autorisiert sind. Selektiert ein Benutzer auf der Web-Seite das betreffende Bedienelement z. B. durch "Anklicken" mit seiner Computermaus, so wird serverseitig geprüft, ob innerhalb eines bestimmten Zeitfensters eine MSISDN der entsprechenden dem Bedienelement zugeordneten Liste von MSISDNs eingeht.

Nach einer weiteren bevorzugten Ausführungsform der Erfindung ist jeder gültigen MSISDN ein Benutzerprofil zugeordnet. Das Benutzerprofil kann weitere Daten zur Überprüfung der Authentizität einer MSISDN, beispielsweise mittels einer PIN beinhalten, sowie auch den Namen, die Adresse und / oder die E-Mail Adresse des betreffenden Benutzers.

Nach einer weiteren bevorzugten Ausführungsform der Erfindung ist der Client des Benutzers als ein Mobiltelefon ausgebildet, über das unmittelbar auf die Web-Seite des Servers zugegriffen werden kann. In diesem Fall handelt es sich also um ein internetfähiges Mobiltelefon, welches beispielsweise nach dem UMTS Standard arbeitet. In diesem Anwendungsfall wird die MSISDN oder eine andere Mobiltelefon-Kennung unmittelbar aus der in dem Mobiltelefon befindlichen Chipkarte ausgelesen und über die Internet-Verbindung zu dem Server übertragen. Der Aufbau einer zusätzlichen Verbindung über das Mobiltelefonnetz erübrigt sich in diesem Fall.

Im Weiteren wird ein bevorzugtes Ausführungsbeispiel der Erfindung mit Bezug auf die Zeichnungen näher erläutert. Es zeigen:

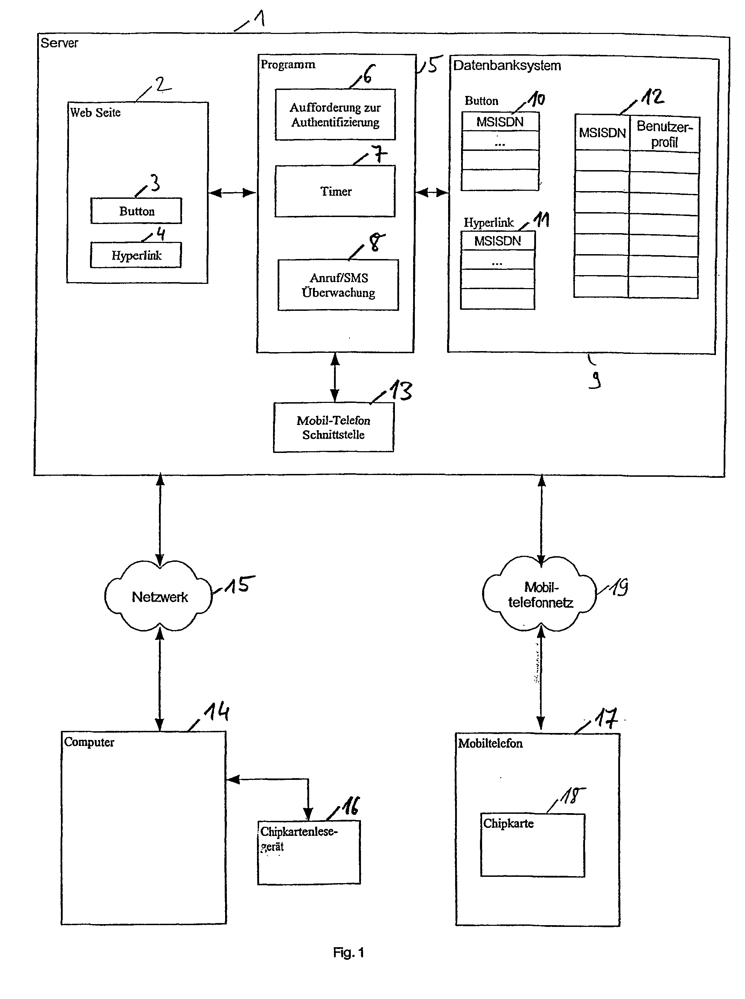

- Fig. 1:: ein Blockdiagramm einer bevorzugten Ausführungsform eines erfindungsgemäßen Systems,

Das System der Fig. 1 beinhaltet einen Servercomputer 1 mit einer Web-Seite 2. Bei der Web-Seite 2 kann es sich um eine Seite einer Internetplattform, beispielsweise eines Internet-Informationssystems oder eines Datenbankabfragesystems handeln. Die Web-Seite 2 beinhaltet ein Bedienelement 3 und eine Bedienelement 4.

Bei dem Bedienelement 3 handelt es sich beispielsweise um einen sogenannten "Button", das heißt, einen virtuellen "Knopf", der über eine graphische Benutzerschnittstelle, z. B. durch "Anklicken" mit einer Computermaus betätigt werden kann. Bei dem Bedienelement 4 handelt es sich um einen sogenannten Hyperlink, in dem ein sogenannter Uniform Resource Locator (URL) einer anderen Web-Seite hinterlegt ist.

Beispielsweise kann ein Benutzer durch Anklicken des Bedienelements 3 Daten von dem Server 1 herunterladen und der Benutzer kann durch Anklicken des Hyperlinks 4 zu einer anderen Web-Seite mit der in dem Hyperlink 4 spezifizierten URL gelangen.

Der Servercomputer 1 beinhaltet ein Programm 5. Das Programm 5 wird automatisch gestartet, wenn das Bedienelement 3 oder das Bedienelement 4 betätigt wird. Das Programm 5 beinhaltet ein Programmmodul 6 mit dem der Benutzer zur Vornahme einer Handlung aufgefordert wird, um dessen Zugriffsberechtigung auf die gewünschten Daten zu überprüfen. Nachdem der Benutzer beispielsweise das Bedienelement 3 betätigt hat, erhält der Benutzer eine Aufforderung, die durch das Programmmodul 6 generiert wird, um eine der folgenden Handlungen vorzunehmen:
- Anruf einer Telefonnummer des Servercomputers 1 mit seinem Mobiltelefon, so dass die MSISDN des Mobiltelefons an den Servercomputer 1 übertragen wird,
- Versenden einer elektronischen Nachricht, beispielsweise einer SMS, von dem Mobiltelefon, so dass ebenfalls die MSISDN des Mobiltelefons zu dem Servercomputer 1 übertragen wird oder
- Wahl einer USSD Nummer, so dass ebenfalls die MSISDN des Mobiltelefons an den Servercomputer 1 übertragen wird.

Zusätzlich kann es erforderlich sein, dass der Benutzer weitere Daten für seine Authentifizierung eingibt. Zur Authentifizierung kann beispielsweise eine dem Benutzer zugewiesene PIN dienen.

Die PIN muss dann von dem Benutzer
- nach Aufbau der Telefonverbindung über die Tastatur seines Mobiltelefons eingegeben werden oder
- als Nutzinformation der elektronischen Nachricht, das heißt, der SMS, gesendet werden oder
- als zusätzlicher Parameter der USSD Nummer über das Mobiltelefon eingegeben werden.

Ferner ist es auch möglich, dass ein zusätzliches Chipkartenlesegerät für die Authentifizierung des Benutzers verwendet wird.

Das Programm 5 beinhaltet ferner ein Programmmodul 7 zum Starten einer Zeituhr, eines sogenannten Timers, nachdem der Benutzer das Bedienelement 3 oder das Bedienelement 4 betätigt hat. Beispielsweise kann der Timer durch des Programmmodul 7 gestartet werden, nachdem die Aufforderung des Programmmoduls 6 dem Benutzer angezeigt worden ist.

Ferner hat das Programm 5 ein Programmmodul 8 zur Überwachung, ob innerhalb eines vorgegebenen Zeitfensters nach dem Start des Timers durch das Programmmodul 7 eine MSISDN eingeht. Eine innerhalb des Zeitfensters eingehende MSISDN wird von dem Programmmodul 8 mittels eines Datenbanksystems 9 überprüft.

In dem Datenbanksystem 9 befindet sich eine Liste 10 und eine Liste 11 von gültigen MSISDNs. Die Liste 10 ist dem Bedienelement 3 zugeordnet; die Liste 11 ist dem Bedienelement 4 zugeordnet. Ferner gehört zu dem Datenbanksystem 9 eine Tabelle 12, in der die MSISDNs sämtlicher registrierter Benutzer erfasst sind. Zu jeder MSISDN gehört ein Benutzerprofil, welches beispielsweise zusätzliche Daten zur Benutzerauthentifizierung, z. B. eine PIN, und weitere Angaben hinsichtlich des Benutzers, z. B. dessen Name, Adresse, Telefonnummer, Faxnummer und E-Mail-Adresse und / oder Zahlungsdaten, z. B. die Kreditkartennummer, beinhaltet.

Der Servercomputer 1 hat ferner eine Mobiltelefon-Schnittstelle 13 zur Entgegennahme von Anrufen von einem Mobiltelefon und / oder von elektronischen Nachrichten, insbesondere SMS Nachrichten, und zur Entgegennahme von Anrufen mit einer USSD Nummer und gegebenenfalls weiteren Parametern.

Ein Computer 14, beispielsweise ein üblicher Personal Computer, ist als Client über ein Netzwerk 15 mit dem Servercomputer 1 verbindbar. Bei dem Netzwerk 15 kann es sich um ein Computernetzwerk, beispielsweise ein Intranet, Extranet oder das Internet handeln. Über den Computer 14 und das Netzwerk 15 kann ein Benutzer auf den Servercomputer 1 bzw. dessen Web-Seite 2 zugreifen. Die Web-Seite 2 wird beispielsweise auf dem Computer 14 mittels eines Browsers angezeigt, z. B. mittels Microsoft Explorer oder Netscape Navigator.

Der Computer 14 kann ein Chipkartenlesegerät 16 aufweisen, z. B. als zusätzliche Sicherheit für die Authentifizierung des Benutzers.

Der Benutzer des Computers 14 verfügt ferner über ein Mobiltelefon 17, das beispielsweise nach dem GSM Standard arbeitet. Das Mobiltelefon 17 hat einen integrierten Chipkartenleser für eine Chipkarte 18. Die Chipkarte 18 ist beispielsweise als sogenanntes Subscriber Identification Module (SIM) ausgebildet und beinhaltet die MSISDN als Mobiltelefon-Kennung des Benutzers.

Der Benutzer kann mit dem Mobiltelefon 17 über ein Mobiltelefonnetz 19 einen Servercomputer 1 anrufen. Bei einem solchen Anruf wird die auf der Chipkarte 18 gespeicherte MSISDN als Mobiltelefon-Kennung über das Mobiltelefonnetz 19 zu der Mobiltelefon-Schnittstelle 13 des Servercomputers 1 übertragen. Ebenso wird die MSISDN auch zu der Mobiltelefon-Schnittstelle 13 übertragen, wenn der Benutzer von dem Mobiltelefon 17 eine SMS versendet oder eine USSD Nummer wählt.

Um auf bestimmte Daten des Servercomputers 1 zuzugreifen, gibt der Benutzer zunächst die Internetadresse, das heißt, die sogenannte URL, der Web-Seite 2 in sein Browserprogramm des Computers 14 ein. Über das Netzwerk 15 wird dann eine Verbindung mit dem Servercomputer 1 hergestellt und die Web-Seite 2 wird auf dem Browserprogramm des Computers 14 dem Benutzer zur Anzeige gebracht. Der Benutzer kann dann die gewünschten Daten durch Selektion eines Bedienelements der Web-Seite 2 anfordern, beispielsweise dadurch, dass der Benutzer das Bedienelement 3 oder das Bedienelement 4 "anklickt".

Durch das Anklicken des Bedienelements 3 oder des Bedienelements 4 wird das Programm 5 gestartet und zwar insbesondere dessen Programmmodul 6. Durch das Programmmodul 6 wird für den Benutzer eine Anzeige generiert und der Benutzer aufgefordert, eine Aktion für die Zugriffskontrolle durchzuführen. Beispielsweise kann der Benutzer zwischen verschiedenen möglichen Aktionen auswählen:
- Anruf einer Telefonnummer des Servercomputers 1 von seinem Mobiltelefon 17,
- Versenden einer SMS an die Telefonnummer des Servercomputers 1 von dem Mobiltelefon 17 oder
- Anruf einer USSD Nummer des Servercomputers 1 von dem Mobiltelefon 17.

Zusätzlich kann es erforderlich sein, dass der Benutzer weitere zur Authentifizierung erforderliche Parameter eingibt.

Nach der Anzeige der durch das Programmmodul 6 generierten Aufforderung wird durch das Programmmodul 7 ein Timer gestartet und das Programmmodul 8 überwacht, ob innerhalb eines vorgegebenen Zeitfensters eine Mobiltelefonkennung eingeht.

Der Benutzer des Computers 14 ruft dann beispielsweise, nachdem er die durch das Programmmodul 6 generierte Aufforderung erhalten hat, mit seinem Mobiltelefon 17 die Telefonnummer des Servercomputers 1 an. Bei diesem Anruf wird die MSISDN des Mobiltelefons 17 mit über das Mobiltelefonnetz 19 mit zu der Mobiltelefon-Schnittstelle 13 des Servercomputers 1 übertragen.

Wenn die von der Mobiltelefon-Schnittstelle 13 empfangene MSISDN innerhalb eines durch den Start des Timers definierten Zeitfensters erhalten wird, überprüft das Programmmodul 8 dann die MSISDN auf ihre Gültigkeit. Hierzu führt das Programmmodul 8 einen Zugriff auf das Datenbanksystem 9 durch.

Hat der Benutzer etwa das Bedienelement 3 angeklickt, so greift das Programmmodul 8 auf die dem Bedienelement 3 zugeordnete Liste 10 zu, um zu prüfen, ob die innerhalb des Zeitfensters empfangene MSISDN Teil der Liste 10 ist. Ist dies der Fall, so wird dem Benutzer der Zugriff auf die entsprechenden Daten gewährt. Beispielsweise wird automatisch das Herunterladen einer durch das Bedienelement 3 spezifizierten Datei eingeleitet.

Wenn der Benutzer das Bedienelement 4 ausgewählt hat, wird entsprechend durch das Programmmodul 8 eine Überprüfung der dem Bedienelement 4 zugeordneten Liste 11 durchgeführt, um festzustellen, ob die innerhalb des Zeitfensters empfangene MSISDN in der Liste 11 beinhaltet ist. Wenn dies der Fall ist, erhält der Benutzer unmittelbar Zugriff auf die durch den Hyperlink spezifizierte Web-Seite.

Wenn der Benutzer an Stelle einer Telefonanrufs eine SMS versendet oder eine USSD Nummer wählt, so wird von der Mobiltelefon-Schnittstelle 13 ebenfalls die MSISDN Nummer des Mobiltelefons 17 empfangen, welche auf dieselbe Art und Weise von dem Programmmodul 8 verarbeitet wird.

Wenn innerhalb des vorgegebenen Zeitfensters keine gültige MSISDN für den Zugriff auf die gewünschten Daten seitens des Servercomputers 1 empfangen wird, so kann entweder der Zugriff entgültig verweigert werden oder der Benutzer erhält eine oder mehrere weitere Versuche, um jeweils innerhalb des vorgegebenen Zeitfensters die erforderliche Aktion, z. B. also den Anruf mit dem Mobiltelefon 17 vorzunehmen.

Ferner kann es erforderlich sein, dass der Benutzer zusätzliche Daten für seine Authentifizierung eingibt. Dies kann so erfolgen, dass der Benutzer nach dem Aufbau der Telefonverbindung zwischen seinem Mobiltelefon 17 und der Mobiltelefon-Schnittstelle 13 des Servercomputers 1 über die Tastatur des Mobiltelefons 17 seine PIN eingibt oder die PIN als Nutzinformation mit einer SMS übertragen wird. Ferner kann die PIN auch als Parameter einer USSD Nummer übertragen werden, z. B. in der Form *103*2108#, wobei es sich bei *103 um die eigentliche USSD Nummer und bei *2108 um die PIN handelt.

Als zusätzliche Sicherheitsmaßnahme ist es auch möglich, das Chipkartenlesegerät 16 des Computers 14 zu verwenden, um beispielsweise eine Chipkarte mit dem privaten Schlüssel des Benutzers für dessen Authentifizierung zu verwenden.

Für die Authentifizierung des Benutzers wird dann von dem Programm 5 auf die Tabelle 12 des Datenbanksystem 9 zugegriffen, um die von dem Benutzer zu dessen Authentifizierung eingegebenen Daten mit dem entsprechenden Benutzerprofil abzugleichen. Dadurch ist eine erhöhte Sicherheit für die Datenzugriffskontrolle gegeben.

Alternativ ist es auch möglich, dass sowohl der Datenzugriff als auch die Datenzugriffskontrolle nur mittels des Mobiltelefons 17 ohne den Computer 14 durchgeführt werden. In diesem Fall handelt es sich um internetfähiges Mobiltelefon 17, das beispielsweise nach dem UMTS Standard arbeitet.

Von diesem Mobiltelefon 17 wird dann über das entsprechend ausgebildete UMTS Mobiltelefonnetz 19 auf die Web-Seite 2 zugegriffen und eines der Bedienelemente 3 oder 4 betätigt. Für die Zugriffskontrolle kann dann automatisch eine in dem Mobiltelefon 17, beispielsweise auf dessen Chipkarte 18, gespeicherte Mobiltelefon-Kennung, z. B. auf die Telefonnummer des Mobiltelefons 17 zugegriffen werden.

Diese wird dann über die UMTS Verbindung zu dem Servercomputer 1 übertragen und dort entsprechend ausgewertet. In diesem Fall ist es nicht erforderlich, dass der Benutzer zur Vornahme einer Aktion aufgefordert wird, sondern die entsprechende Aktion kann vollautomatisch ablaufen. Entsprechend wird der Timer in diesem Fall nicht mit der Anzeige einer Aufforderung gestartet, sondern bereits mit der Betätigung eines der Bedienelemente 3 oder 4. In diesem Fall kann ein sehr kurzer Timerwert, das heißt, ein sehr kleines Zeitfenster wegen des automatischen Ablaufs vorgesehen sein. In diesem Ausführungsbeispiel benötigt der Benutzer keinen zusätzlichen Computer, sondern das Mobiltelefon 17 nimmt die Funktion des Computers wahr.

Gemäß eine Ausführungsform eines entsprechenden Verfahrens erfolgt in dem Schritt 30 ein Aufbau einer Verbindung mit einer Web-Seite über das Internet von einem Client-Gerät, beispielsweise einem Computer oder einer internetfähigen Mobiltelefon. In dem Schritt 32 werden auf der Web-Seite Daten angefordert, wobei es sich um vertrauliche Informationen handelt, die nur einem begrenzten Personenkreis zugänglich sein sollen.

In dem Schritt 34 erhält der Benutzer auf seinem Client-Gerät eine Aufforderung zur Eingabe einer Zugangsberechtigung. Hierzu ruft der Benutzer in dem Schritt 50 von seinem Mobiltelefon eine bestimmte Telefonnummer an, so dass die MSISDN seines Mobiltelefons zu der gewählten Nummer übertragen wird.

Alternativ kann der Benutzer auch eine SMS in dem Schritt 36 versenden oder auch eine USSD Nummer wählen. In dem Schritt 38 wird die MSISDN serverseitig empfangen. Bei Verwendung eines internetfähigen Mobiltelefons können die Schritte 34 und 50 bzw. 36 durch einen automatischen Ablauf ersetzt werden, indem die MSISDN Nummer oder eine andere Mobiltelefon-Kennung des internetfähigen Mobiltelefons automatisch nach der Anforderung der vertraulichen Information in dem Schritt 32 zu dem Server übertragen wird, um dort überprüft zu werden.

In dem Schritt 40 erfolgt die Überprüfung der MSISDN, indem die MSISDN auf die Zugangsberechtigung für die angeforderten Daten überprüft wird. Wenn eine solche Zugangsberechtigung vorliegt, werden die betreffenden Daten in dem Schritt 42 zu dem Client-Gerät des Benutzer übertragen und dort gespeichert, angezeigt oder weiter verarbeitet.

Wenn es sich um keine gültige MSISDN handelt oder wenn innerhalb eines vorgegebenen Zeitfensters keine MSISDN empfangen worden ist, wird in dem Schritt 44 der Zugriff auf die angeforderten Daten verweigert. Von dem Schritt 44 ausgehend, kann dann der Benutzer eine oder mehrere zusätzliche Möglichkeiten für den Anruf der Nummer des Servers innerhalb des vorgegebenen Zeitfensters erhalten.

Nach einer entgültigen Zugriffsverweigerung in dem Schritt 44 kann in dem Schritt 46 die Identität des Benutzers festgestellt werden, wenn sich die für den gewünschten Zugriff nicht autorisierte MSISDN einem Benutzerprofil zuordnen lässt. Dies ist insbesondere dann der Fall, wenn es sich bei der betreffenden MSISDN um einen registrierten Benutzer handelt, der versucht hat, auf Daten zuzugreifen, für die er nicht autorisiert ist. In dem Schritt 48 kann dann eine Nachricht, z. B. als SMS Nachricht, an den Benutzer versendet werden, um ihn auf seine beschränkten Zugangsrechte hinzuweisen. Hiermit ist zugleich ein edukativer Effekt verbunden.

### Bezugszeichenliste

- Servercomputer: 1
- Web-Seite: 2
- Bedienelement: 3
- Bedienelement: 4
- Programm: 5
- Programmmodul: 6
- Programmmodul: 7
- Programmmodul: 8
- Datenbanksystem: 9
- Liste: 10
- Liste: 11
- Tabelle: 12
- Mobiltelefon-Schnittstelle: 13
- Computer: 14
- Netzwerk: 15
- Chipkartenlesegerät: 16
- Mobiltelefon: 17
- Chipkarte: 18
- Mobiltelefonnetz: 19

## Patentansprüche

1. Verfahren zur Datenzugriffskontrolle für den Zugriff auf Daten über einen Servercomputer (1), wobei der Servercomputer (1) eine Webseite (2) mit zumindest einem ersten Bedienelement (3) und einem zweiten Bedienelement (4), ein Datenbanksystem (9) mit einer ersten Liste (10) gültiger Mobilfunk-Kennungen und einer zweiten Liste (11) gültiger Mobilfunk-Kennungen aufweist, wobei die erste Liste dem ersten Bedienelement und die zweite Liste dem zweiten Bedienelement zugeordnet sind, und der Servercomputer einen Timer (7) und eine Mobiltelefon-Schnittstelle (13) aufweist, wobei das Verfahren die folgenden Schritte aufweist:
- Übertragung der Webseite (2) von dem Servercomputer (1) zu einem Client-Computer (14; 17),
- Anzeige der Webseite (2) mittels eines Browser-Programms des Client-Computers,
- Auswahl eines der Bedienelemente der Webseite (2) über eine graphische Schnittstelle des Client-Computers,
- Starten eines Server-Programms (5) zur Generierung einer Anzeige für den Benutzer mit einer Aufforderung zur Durchführung einer Aktion für die Zugriffskontrolle (6),
- Starten des Timers (7),
- Überwachung, ob innerhalb eines vorgegebenen Zeitfensters nach dem Starten des Timers eine Mobilfunk-Kennung über die Mobiltelefon-Schnittstelle eingeht, und wenn das der Fall ist, Überprüfung der Mobilfunk-Kennung auf ihre Gültigkeit, indem überprüft wird, ob die empfangene Mobilfunk-Kennung in der Liste des Datenbanksystems, die dem ausgewählten Bedienelement zugeordnet ist, vorhanden ist, und gegebenenfalls Freigabe des Zugriffs.

2. Verfahren nach Anspruch 1, wobei es sich bei der Aktion für die Zugriffskontrolle um einen Anruf einer dem Servercomputer zugeordneten Telefonnummer handelt, so dass bei dem Anruf von einem Mobiltelefon (17) die Mobiltelefon-Kennung zu der Mobiltelefon-Schnittstelle (13) des Servercomputers (1) übertragen wird.

3. Verfahren nach Anspruch 1 oder 2, wobei es sich bei der Aktion für die Zugriffskontrolle um die Versendung einer elektronischen Nachricht, vorzugsweise einer SMS, oder um die Wahl einer USSD von einem Mobiltelefon (17) des Benutzers an eine dem Servercomputer zugeordnete Adresse, vorzugsweise eine dem Server zugeordnete Telefonnummer, handelt, so dass die Mobiltelefon-Kennung zusammen mit der elektronischen Nachricht zu dem Servercomputer übertragen wird.

4. Verfahren nach Anspruch 1, 2 oder 3, wobei es sich bei der Mobiltelefon-Kennung um die Telefonnummer eines Mobiltelefons (17) des Benutzers handelt.

5. Verfahren nach einem der vorhergehenden Ansprüche 1 bis 4, wobei es sich bei der Mobiltelefon-Kennung um eine auf einer Chipkarte, vorzugsweise einer SIM, gespeicherte Mobiltelefonnummer handelt.

6. Verfahren nach einem der vorhergehenden Ansprüche 1 bis 5, wobei die Datenbank gültige Mobiltelefon-Kennungen bestimmten Daten zuordnet.

7. Verfahren nach Anspruch 6, wobei die Datenbank für jeden Benutzer ein Benutzerprofil beinhaltet.

8. Verfahren nach einem der vorhergehenden Ansprüche, wobei es sich bei der Mobiltelefon-Schnittstelle (13) um eine USSD-Schnittstelle handelt und die Übertragung der Mobiltelefon-Kennung über die USSD-Schnittstelle erfolgt.

9. Verfahren nach einem der vorhergehenden Ansprüche, wobei zusätzlich zur Eingabe der Mobiltelefon-Kennung eine Eingabe von zusätzlichen Daten zur Authentifizierung des Benutzers erfolgt, und die zusätzlichen Daten zur Authentifizierung des Benutzers nach Zustandekommen einer Telefonverbindung durch Eingabe über die Tastatur des Mobiltelefons des Benutzers oder durch Übertragung als Teil der elektronischen Nachricht oder als Parameter einer USSD-Nummer erfolgt.

10. Verfahren nach einem der vorhergehenden Ansprüche, wobei seitens des Benutzers ein Chipkartenlesegerät für die Authentifizierung des Benutzers gegenüber dem Servercomputer verwendet wird.

11. Servercomputer mit
- einer Webseite (2), die zumindest ein erstes Bedienelement (3) und ein zweites Bedienelement (4) aufweist,
- einem Datenbanksystem (9) mit einer ersten Liste (10) gültiger Mobilfunk-Kennungen und einer zweiten Liste (11) gültiger Mobilfunk-Kennungen, wobei die erste Liste dem ersten Bedienelement und die zweite Liste dem zweiten Bedienelement zugeordnet ist,
- Mitteln (2, 15)zur Herstellung einer Verbindung zu einem Client-Computer (14; 17) eines Benutzers zur Eingabe einer Datenanforderung durch den Benutzer durch Selektion eines der Bedienelemente der Webseite,
- Mitteln (7) zur Überwachung, ob eine gültige Mobiltelefon-Kennung innerhalb eines Zeitfensters nach Eingabe der Datenanforderung empfangen wird, wobei die Mobiltelefon-Kennung für eine Freigabe des Zugriffs auf die Daten dahingehend überprüft wird, ob sie in der dem selektierten Bedienelement zugeordneten Liste vorhanden ist.

12. Servercomputer nach Anspruch 11, mit einer Mobiltelefon-Schnittstelle (13) zur Entgegennahme eines Anrufs von einem Mobiltelefon (17) des Benutzers und / oder zum Empfang einer elektronischen Nachricht von dem Mobiltelefon des Benutzers, vorzugsweise einer SMS, und / oder zum Empfang einer USSD-Nachricht von dem Mobiltelefon des Benutzers.

13. Servercomputer nach Anspruch 11 oder 11, mit zusätzlichen Mitteln (16) zur Authentifizierung des Benutzers.

14. System zur Datenzugriffskontrolle mit einem Servercomputer nach einem der vorhergehenden Ansprüche 11 bis 13 und einem über ein Netzwerk mit dem Servercomputer verbindbaren Client-Computer.

15. System nach Anspruch 14, wobei der Client-Computer als Personalcomputer ausgebildet ist und der Client-Computer über ein Computernetzwerk (15), vorzugsweise das Internet, mit dem Servercomputer verbindbar ist, und mit einem Mobiltelefon (17) für die Eingabe der Mobiltelefon-Kennung.

16. System nach Anspruch 14 oder 15, wobei der Client-Computer als internetfähiges Mobiltelefon ausgebildet ist.

17. System nach Anspruch 14, 15 oder 16 mit einem Chipkartenlesegerät (16) für den Client-Computer zur Authentifizierung des Benutzers gegenüber dem Servercomputer.

## Claims

1. Method for data access control for access to data via a server computer (1), whereby the server computer (1) has a web site (2) with at least one first operating element (3) and a second operating element (4), a database system (9) with a first list (10) of valid mobile radio identification codes and a second list (11) of valid mobile radio identification codes, whereby the first list is assigned to the first operating element and the second list is assigned to the second operating element, and the server computer has a timer(7) and a mobile telephone interface (13), whereby the method has the following steps:
- transfer of the web site (2) from the server computer (1) to a client computer (14; 17),
- display of the web site (2) by means of a browser program of the client computer,
- selection of one of the operating elements of the web site (2) via a graphic interface of the client computer,
- starting a server program (5) for generating a display for the user with a request to carry out an action for the access control (6),
- starting of the timer (7)
- monitoring of whether a mobile radio identification code is received via the mobile telephone interface within a predetermined time window after starting the timer, and if that is the case, checking the mobile radio identification code for validity by checking whether the received mobile radio identification code is present in the list of the database system assigned to the selected operating element, and possibly granting of access.

2. Method according to claim 1, whereby the action for access control concerns calling a telephone number assigned to the server computer, such that during the call from a mobile telephone (17), the mobile telephone identification code is transmitted to the mobile telephone interface (13) of the server computer (1).

3. Method according to claim 1 or 2, whereby the action for access control concerns the sending of an electronic message, preferably an SMS, or the selection of a USSD from a mobile telephone (17) of the user to an address assigned to the server computer, preferably a telephone number assigned to the server, such that the mobile telephone identification code is transmitted to the server computer together with the electronic message.

4. Method according to claim 1, 2 or 3, whereby the mobile telephone identification code is the telephone number of a mobile telephone (17) of the user.

5. Method according to one of the previous claims 1 to 4, whereby the mobile telephone identification code is a mobile telephone number stored on a chip card, preferably a SIM card.

6. Method according to one of the previous claims 1 to 5, whereby the database assigns valid mobile telephone identification codes to particular data.

7. Method according to claim 6, whereby the database contains a user profile for each user.

8. Method according to one of the previous claims, whereby the mobile telephone interface (13) comprises a USSD interface and the transfer of the mobile telephone identification code takes place via the USSD interface.

9. Method according to one of the previous claims, whereby additionally for input of the mobile telephone identification code, input of additional data for authentication of the user takes place, and the additional data for authentication of the user takes place after establishment of a telephone connection by input via the keyboard of the mobile telephone of the user or by transfer as part of the electronic message or as a parameter of a USSD number.

10. Method according to one of the previous claims, whereby, on the part of the user, a chip card reading device is used for authentication of the user to the server computer.

11. Server computer with
- a web site (2) which has at least one first operating element (3) and one second operating element (4),
- a database system (9) with a first list (10) of valid mobile radio identification codes and a second list (11) of valid mobile radio identification codes, whereby the first list is assigned to the first operating element and the second list is assigned to the second operating element,
- means (2, 15) for manufacturing a connection to a client computer (14; 17) of a user for input of a data request by the user through selection of one of the operating elements of the web site,
- means (7) for monitoring whether a valid mobile telephone identification code is received within a time window after input of the data request, whereby for granting of access to the data the mobile telephone identification code is checked as to whether it is present in the list assigned to the selected operating element.

12. Server computer according to claim 11, having a mobile telephone interface (13) for receiving a call from a mobile telephone (17) of the user and/or for receiving an electronic message from the mobile telephone of the user, preferably an SMS and/or for receiving a USSD message from the mobile telephone of the user.

13. Server computer according to claim 11 or 12, having additional means (16) for authentication of the user.

14. System for data access control with a server computer according to one of the previous claims 11 to 13 and a client computer connectable via a network to the server computer.

15. System according to claim 14, whereby the client computer is designed as a personal computer and the client computer is connectable via a computer network (15), preferably the internet, to the server computer, and having a mobile telephone (17) for input of the mobile telephone identification code.

16. System according to claim 14 or 15, whereby the client computer is designed as an internet-capable mobile telephone.

17. System according to claims 14, 15 or 16, having a chip card reading device (16) for the client computer for authentication of the user to the server computer.

## Revendications

1. Procédé de contrôle d'accès à des données pour l'accès à des données via un ordinateur serveur (1), selon lequel l'ordinateur serveur (1) présente un site web (2) avec au moins un premier élément d'actionnement (3) et un deuxième élément d'actionnement (4), un système de banque de données (9) avec une première liste (10) d'identifications de radiocommunication mobile valides et une deuxième liste (11) d'identifications de radiocommunication mobile valides, la première liste étant associée au premier élément d'actionnement et la deuxième liste au deuxième élément d'actionnement, et l'ordinateur serveur présentant une horloge (7) et une interface de téléphone mobile (13), les étapes suivantes :
**caractérisé par**
- transmission de site web (2) de l'ordinateur serveur (1) vers un ordinateur client (14 ; 17),
- affichage du site web (2) au moyen d'un programme de navigation de l'ordinateur client,
- sélection d'un des éléments d'actionnement du site web (2) par l'intermédiaire d'une surface graphique de l'ordinateur client,
- lancement d'un programme de serveur (5) pour générer un message pour l'utilisateur avec une demande de réalisation d'une action pour le contrôle d'accès (6),
- lancement de l'horloge,
- surveillance si dans un intervalle de temps prédéterminé après le lancement de l'horloge une identification de radiocommunication mobile est reçue par l'intermédiaire de l'interface de téléphone mobile, et dans ce cas vérification de la validité de l'identification de radiocommunication mobile en vérifiant si l'identification de radiocommunication mobile reçue est présente dans la liste du système de banque de données associée à l'élément d'actionnement sélectionné, et le cas échéant autorisation de l'accès.

2. Procédé selon la revendication 1,
**caractérisé en ce que**
l'action pour le contrôle d'accès est un appel d'un numéro de téléphone associé à l'ordinateur serveur de telle sorte que lors de l'appel d'un téléphone mobile (17) l'identification de celui-ci est transmise à l'interface de téléphone mobile (13) de l'ordinateur serveur (1).

3. Procédé selon la revendication 1 ou 2,
**caractérisé en ce que**
l'action pour le contrôle d'accès est l'envoi d'un message électronique, de préférence un SMS, ou la numérotation d'une USSD d'un téléphone mobile (17) de l'utilisateur vers une adresse associée à l'ordinateur serveur, de préférence un numéro de téléphone associé au serveur, de telle sorte que l'identification de téléphone mobile est transmise à l'ordinateur serveur conjointement avec le message électronique.

4. Procédé selon la revendication 1, 2 ou 3,
**caractérisé en ce que**
l'identification de téléphone mobile est le numéro de téléphone d'un téléphone mobile (17) de l'utilisateur.

5. Procédé selon l'une quelconque des revendications 1 à 4,
**caractérisé en ce que**
l'identification de téléphone mobile est un numéro de téléphone mobile stocké sur une carte à puce, de préférence une carte SIM.

6. Procédé selon l'une quelconque des revendications 1 à 5,
**caractérisé en ce que**
la banque de données associe des identifications de téléphone mobile valides à des données déterminées.

7. Procédé selon la revendication 6,
**caractérisé en ce que**
la banque de données contient un profil d'utilisateur pour chaque utilisateur.

8. Procédé selon l'une quelconque des revendications précédentes,
**caractérisé en ce que**
l'interface de téléphone mobile (13) est une interface USSD et la transmission de l'identification de téléphone mobile s'effectue par l'interface USSD.

9. Procédé selon l'une quelconque des revendications précédentes,
**caractérisé en ce qu'**
en plus de l'entrée de l'identification de téléphone mobile on effectue une entrée de données supplémentaires pour authentifier l'utilisateur après l'établissement d'une communication téléphonique par entrée à l'aide du clavier du téléphone mobile de l'utilisateur ou par transmission en tant que partie du message électronique ou paramètre d'un numéro USSD.

10. Procédé selon l'une quelconque des revendications précédentes,
**caractérisé en ce que**
l'utilisateur utilise un lecteur de cartes à puce pour authentifier l'utilisateur par rapport à l'ordinateur serveur.

11. Ordinateur serveur comprenant :
- un site web (2) qui présente au moins un premier élément d'actionnement (3) et un deuxième élément d'actionnement (4),
- un système de banque de données (9) avec une première liste (10) d'identifications de radiocommunication mobile valides et une deuxième liste (11) d'identifications de radiocommunication mobile valides, dans lequel la première liste est associée au premier élément d'actionnement et la deuxième liste au deuxième élément d'actionnement,
- des moyens (2, 15) pour établir une communication vers un ordinateur client (14 ; 17) d'un utilisateur pour entrer une demande de données par l'utilisateur en sélectionnant l'un des éléments d'actionnement du site web, et
- des moyens (7) pour surveiller si une identification de téléphone mobile valide est reçue dans un intervalle de temps après l'entrée de la demande de données, l'identification de téléphone mobile pour autoriser l'accès aux données étant vérifiée pour savoir si elle est présente dans la liste associée à l'élément d'actionnement sélectionné.

12. Ordinateur serveur selon la revendication 11,
**caractérisé par**
une interface de téléphone mobile (13) pour recevoir un appel et/ou un message électronique, de préférence un SMS, et/ou un message USSD d'un téléphone mobile (17) de l'utilisateur.

13. Ordinateur serveur selon la revendication 11 ou 12,
**caractérisé par**
des moyens (16) supplémentaires pour authentifier l'utilisateur.

14. Système pour le contrôle d'accès à des données, comprenant un ordinateur serveur selon l'une quelconque des revendications 11 à 13, et un ordinateur client relié à l'ordinateur serveur par un réseau.

15. Système selon la revendication 14,
**caractérisé en ce que**
l'ordinateur client est un ordinateur personnel et peut être relié à l'ordinateur serveur par un réseau informatique (15), de préférence l'Internet, et comprenant un téléphone mobile (17) pour entrer l'identification de téléphone mobile.

16. Système selon la revendication 14 ou 15,
**caractérisé en ce que**
l'ordinateur client est un téléphone mobile compatible avec l'Intemet.

17. Système selon la revendication 14, 15 ou 16,
**caractérisé par**
un lecteur de cartes à puce (16) pour l'ordinateur client en vue de l'authentification de l'utilisateur par rapport à l'ordinateur serveur.
